Europäisches Patentamt

European Patent Office

Office européen des brevets

(19)

(11) EP 0 777 928 B1

(12) EUROPÄISCHE PATENTSCHRIFT

(45) Veröffentlichungstag und Bekanntmachung des Hinweises auf die Patenterteilung:
03.03.1999 Patentblatt 1999/09

(21) Anmeldenummer: 95928978.6

(22) Anmeldetag: 24.08.1995

(51) Int Cl.⁶: $H02H\ 3/33$

(86) Internationale Anmeldenummer:
PCT/DE95/01129

(87) Internationale Veröffentlichungsnummer:
WO 96/06475 (29.02.1996 Gazette 1996/10)

(54) **FEHLERSTROMSCHUTZSCHALTER MIT AUTOMATISCHER ÜBERWACHUNGSEINRICHTUNG**

EARTH-LEAKAGE CIRCUIT BREAKER WITH AUTOMATIC MONITORING FACILITY

DISJONCTEUR A COURANT DE DEFAUT POURVU D'UN DISPOSITIF DE SURVEILLANCE AUTOMATIQUE

(84) Benannte Vertragsstaaten:
AT BE CH DE DK ES FR GB GR IE IT LI LU MC NL PT SE

(30) Priorität: 24.08.1994 DE 4429949
31.07.1995 DE 19528019
31.07.1995 DE 19528020
07.08.1995 DE 19528918

(43) Veröffentlichungstag der Anmeldung:
11.06.1997 Patentblatt 1997/24

(73) Patentinhaber: AEG Niederspannungstechnik GmbH & Co. KG
24531 Neumünster (DE)

(72) Erfinder: **Berthold, Rainer**
69251 Gaiberg (DE)

(74) Vertreter:
**Leson, Thomas Johannes Alois, Dipl.-Ing. et al**
**Patentanwälte**
**Tiedtke-Bühling-Kinne & Partner,**
**Bavariaring 4**
**80336 München (DE)**

(56) Entgegenhaltungen:
EP-A- 0 502 393     EP-A- 0 676 844
GB-A- 2 056 094

## Beschreibung

Die Erfindung betrifft einen Fehlerstromschutzschalter nach dem Oberbegriff des Anspruchs 1.

Fehlerstromschutzschalter sind Geräte der Hausinstallationstechnik und sollen Menschen vor gefährlichen Stromschlägen und Gebäude vor durch elektrische Installationen hervorgerufenen Bränden schützen. Die meisten der heute verwendeten Fehlerstromschutzschalter bestehen aus einem Gehäuse, in dem ein Summenstromwandler, ein Magnetauslöser, ein Schaltwerk und eine Prüfeinrichtung (Prüftaste) untergebracht sind.

Es ist bekannt, daß diese Geräte im Laufe der Zeit ausfallen können. Dabei sind die nachgewiesenermaßen anfälligsten Elemente der Magnetauslöser und die Prüfeinrichtung. Ein wesentliches Merkmal des Magnetauslösers eines Fehlerstromschutzschalters ist der sehr geringe Luftspalt zwischen den Polflächen seines Ankers und Joches. Wenn nach monate- oder jahrelangem Nichtöffnen dieser Magnetkontakte die feingeschliffenen Polflächen langsam kaltverschweißen, wie aus der Relaistechnik bekannt ist, so steigt auch der Ansprechwert des Fehlerstromschutzschalters langsam an, bis die Verschweißung (ein Diffusionsschweißprozeß) derart fest ist, daß ein völliges Haften des Ankers am Joch auftritt. Selbst bei völlig fehlendem Permanentmagnetfluß reicht dann die Federkraft nicht aus, den Anker zu lösen, das Schaltwerk zu entklinken und damit den Stromkreis zu unterbrechen.

Deshalb sind Fehlerstromschutzschalter zumeist mit einer von Hand zu betätigenden Prüftaste ausgerüstet. Auch ist bereits ein Fehlerstromschutzschalter mit automatischer Prüfung bekannt (EP-A 0 502 393).

Desweiteren ist in der EP 0 220 408 ein selbstüberwachender Fehlerstromschutzschalter beschrieben, bei dem die regelmäßige Funktionsprüfung entfallen kann, indem sich der Fehlerstromschutzschalter während der gesamten Betriebsdauer ständig selbst überwacht. Zusätzlich schaltet der Fehlerstromschutzschalter auch bei Unterbrechung der Stromzuführung ab und bei Wiederkehr der Stromzuführung nicht selbsttätig wieder ein. Dabei bezieht sich die Überwachung hauptsächlich auf die elektronische Schaltung. Der Schalter schaltet ab, wenn der Fehlermennstrom überschritten wird. Er ist nicht in der Lage, einen sich anbahnenden Defekt zu erkennen.

Sowohl Fehlerstromschutzschalter mit einer handbetätigbaren als auch mit einer automatische Prüftaste gemäß DE-PS 41 06 652, die zum Beispiel monatlich die Funktionsweise des Fehlerstromschutzschalters überprüfen, haben den Nachteil, daß nur ein nicht mehr auslösender Schalter, also ein die Schutzfunktion nicht mehr ausführender Schalter, erkannt wird. Dies hat zur Folge, daß der Schutz über Tage, ja Wochen nicht existiert und der Schalter in dieser Zeit im Notfall versagt. Hinzu kommt, daß nur der Fehlerstromansprechwert überprüft wird.

Die frühere europäische Patentanmeldung EP-A-0 676 844 stellt einen Stand der Technik nach Artikel 54 (3) EPÜ dar und offenbart einen ähnlichen Fehlerstromschutzschalter wie Anspruch 1. In dieser Anmeldung werden jedoch die Fehlerstromansprechwerte und nicht die Ansprechzeiten zum rechtzeitigen Erkennen eines sich anbahnenden Defektes benutzt.

Nun schreibt K. W. Brunner in der Zeitschrift "Elektrische Maschinen", April 1994, 73. Jahrgang auf den Seiten 10 bis 12, daß es Gründe gibt, nicht nur die Fehlerstromansprechwerte, sondern auch die Fehlerstromansprechzeiten zu überprüfen. Diese liegen unter anderem in dem Zusammenhang zwischen Körperstrom $i_B$ und Durchströmungsdauer t bei Berührung einer stromführenden Leitung. Biegelmeier (wie bereits erwähnt) beschreibt diesen Zusammenhang ausführlich. Er geht auch aus Diagramm 1 hervor, welches die Funktion zeigt $I_\Delta = f (\Delta t)$.

Erkennbar sind die Wirkungsbereiche von Wechselstrom 50/60 Hz auf den menschlichen Körper nach IEC-Report 479, Kapitel 2, 2. Auflage:

| | |
|---|---|
| Bereich 1... | in der Regel keine Reaktion; |
| Bereich 2... | in der Regel keine pathophysiologisch gefährliche Wirkung; |
| Bereich 3... | Übergangsbereich ohne feste Grenzen. In der Regel keine organischen Schäden; keine Gefahr von Herzkammerflimmem, jedoch Muskelreaktionen und Beschwerden bei der Atmung mit steigender Stromstärke und Einwirkungsdauer; |
| Bereich 4... | Herzkammerflimmem mit steigender Wahrscheinlichkeit (Kurve $c_2$ Wahrscheinlichkeit kleiner als 5 %, Kurve $c_3$ Wahrscheinlichkeit kleiner als 50 %). Mit steigender Stromstärke und Einwirkungsdauer starke pathophysiologische Wirkungen, wie Merzstillstand, Atemstillstand und Verbrennungen. In bezug auf Herzkammerflimmem beziehen sich die Kurven $c_1$ bis $c_3$ auf Längsdurchströmung linke Hand - linker Fuß. Bei Einwirkungsdauern unter 200 ms tritt Herzkammerflimmem nur in der vulnerablen Phase auf, wenn die Schwellenwerte überschritten werden. |

Beträgt die Durchströmungsdauer, die gleich der Ansprechzeit eines Fehlerstromschutzschalters ist, zum Beispiel 40 ms, so zeigt ein Fehlerstrom der Größenordnung 100 bis 200 mA in der Regel keine pathophysiologisch gefährliche Wirkung. Beträgt sie dagegen $\geq$100 ms, so wären 100 bis 200 mA Fehlerstrom für den Menschen riskant. Würde sie $\geq$ 500 ms betragen, so wären bereits 30 mA riskant. Man erkennt, daß das Produkt aus Fehlerstrom und Ansprechzeit große Bedeutung besitzt.

Der Erfindung liegt die Aufgabe zugrunde, einen Fehlerstromschutzschalter zu schaffen, bei dem sowohl der Fehlerstromansprechwert und die Ansprechzeit als auch das Produkt aus beiden in regelmäßigen Abständen überprüft werden kann, entweder durch Handbetätigung einer Taste oder eines Schalters oder aber vollautomatisch, und bei dem bei Überschreitung der Sollansprechwerte Alarm gegeben wird.

Der Erfindung liegt weiter die Aufgabe zugrunde, einen Fehlerstromschutzschalter zu schaffen, bei dem nicht erst ein defekter Schalter erkannt, sondern auch schon ein sich anbahnender Defekt noch vor dem Versagen des Schalters detektiert und rechtzeitig Alarm gegeben wird, um den Schalter noch vor seinem Ausfall auswechseln zu können.

Allen bekannten Fehlerstromschutschaltern haften weiterhin folgende Nachteile an:

• Sie haben kein Fail-safe-Verhalten.
• Sie können bei Versagen der elektrischen beziehungsweise elektronischen Steuereinheit die Fehlerstromschutzfunktion nicht immer aufrecht erhalten.
• Sie berücksichtigen nicht die möglicherweise fließenden Isolationsströme, wie zum Beispiel die kapazitiven Leckströme.
• Sie überwachen nicht die Hauptstromkontakte auf Verschweißen und/oder das Schaltwerk auf Klemmen oder ähnlich.
• Sie kontrollieren nicht das Öffnen der Magnetauslöserkontakte.
• Sie kontrollieren nicht die elektronische Steuereinheit.

Der Erfindung liegt deshalb weiterhin die Aufgabe zugrunde, einen Fehlerstromschutzschalter zu schaffen, der diese zusätzlichen Eigenschaften besitzt.

Diese Aufgaben werden bei einer gattungsgemäßen Einrichtung durch die kennzeichnenden Merkmale des Anspruchs 1 gelöst. Weiterbildungen und vorteilhafte Ausgestaltungen der Erfindung sind Gegenstände der Unteransprüche.

Der Fehlerstromschutzschalter besitzt zur Detektierung eines Fehlerstromes in einer Netzleitung einen Summenstromwandler, dessen Primärwicklung durch die Netzleiter gebildet ist. Der Summenstromwandler besitzt weiterhin eine Sekundärwicklung, an der bei Auftreten eines Fehlerstromes im Netz ein Signal entsteht, welches den Fehlerstromschutzschalter zum Ausschalten bringt. Dabei ist die elektrische Schaltung so bemessen, daß der Schalter zum Beispiel bei einem Fehlerstrom ≤ 30 mA innerhalb von 40 ms ausschaltet.

Mit Hilfe eines in einem Mikroprozessor oder Mikrocomputer integrierten Stromgebers und Stromsensors eines Zeitgebers und eines elektronischen Zeitmessers werden der Fehlerstromansprechwert und die Ansprechzeit gemessen und gegebenenfalls miteinander multipliziert, mit Sollansprechströmen, Sollzeiten und Sollprodukten verglichen, bei Überschreiten der Sollwerte wird rechtzeitig Alarm gegeben und während der Messung mit Hilfe einer Sperreinrichtung das Öffnen der Stromkontakte verhindert. Diese Sperreinnchtung greift zwischen Schaltwerk und Magnetauslöser oder in das Schaltwerk direkt ein und verhindert, daß der Stößel des Magnetauslösers das Schaltwerk betätigt.

Außerdem ist die Sperreinnchtung so ausgebildet, daß sie auch, wenn vorbestimmte Grenzansprechwerte überschritten werden, zum Aufschlagen der Hauptstromkontakte und anschließend als Wiedereinschaltsperre dienen kann, was einem Fail-safe-Verhalten gleichkommt.

Damit diese Sperre bei einem Fehler in der Steuerelektronik die Fehlerstromschutzfunktion nicht blockiert, wird in einem solchen Fall die Sperreinnchtung beispielsweise durch eine sich automatisch entklinkende Feder aus ihrer Sperrposition herausgezogen.Dies geschieht jedoch nicht nach einer Fail-safe-Stromabschaltung.

Erfolgt keine Alarmgabe, das heißt, die Sollansprechwerte wurden nicht überschritten, so werden die gemessenen Ansprechwerte gespeichert und bei der nächsten Messung (Überprüfung) ihr Anstieg bestimmt. Aus diesem so ermittelten Anstiegt läßt sich auf den Zeitpunkt des Überschreitens der maximalen Sollansprechwerte schließen, das heißt, extrapolieren und sie in geeigneter Weise zur Anzeige bringen. Dadurch ist genügend Zeit, den Fehlerstromsch utzschalter rechtzeitig auszutauschen.

Die vorbestimmten Zeiten, nach denen ein Meßvorgang eingeleitet wird, richten sich nach der Größe der Ansprechwerte. Nähert sich ein Ansprechwert dem Sollwert, verkürzen sich automatisch die Zeitabstände, nach denen die jeweils nächsten Messungen erfolgen.

Sollen nicht nur die Ansprechwerte überwacht werden, sondern die Funktionsfähigkeit des gesamten Schalters, dann wird bei Erreichen eines bestimmten Ansprechwert-Anstieges Alarm gegeben. Wird daraufhin der Schalter nicht ausgetauscht, so schaltet er sich nach einer ebenfalls vorbestimmten Zeit, zum Beispiel nach 6 bis 8 Wochen, selbsttätig aus.

Handelt es sich um einen 300 mA-Fehlerstromschutzschalter, der für den Brandschutz eingesetzt wird, so wären 6 bis 8 Wochen viel zu lang, das heißt er muß sofort abschalten, wenn ein gefährlicher Anstieg der Auslösezeit erreicht wird.

Eine weitere Möglichkeit, den gesamten Schalter zu überwachen, besteht darin, jeweils nach Erreichen der noch zulässigen Ansprechzeit nicht nur Alarm zu geben, sondern die Hauptstromkontakte zu öffnen und innerhalb 200 ms wieder zu schließen. Damit in diesem Fall während des Offenstehens der Hauptstromkontakte der Strom weiterfließt, schließen sich über diese automatisch bypassartig Hilfsstromkontakte, die sich nach dem Gesamtüberprüfungsvorgang (Meßvorgang), das heißt nach dem Wiederschließen der Hauptstromkontakte, wieder öffnen.

Sollen jedoch die Hauptstromkontakte nicht überprüft werden, da in den letzten Jahren die Schaltwerke der Fehlerstromschutzschalter sehr selten ausfielen, weil keine harzenden Schmierstoffe mehr verwendet wurden, spricht bei Erreichen der Ansprechzeit nur der Auslösemechanismus, zum Beispiel das Auslöserelais, der Magnetauslöser oder ein anders gearteter Aktor, beispielsweise ein Piezo-Aktor an. Hierbei verhindert eine Sperreinrichtung das Auslösen des Schaltwerkes. Auch damit läßt sich ein Stromausfall während des Prüfvorganges umgehen.

Da beispielsweise die Magnetkontakte eines Magnetauslösers nach Öffnen gleich wieder geschlossen werden müssen, besitzt die Sperreinnchtung eine besondere Form, so daß sich die Magnetkontakte beim Zurückziehen der Sperreinrichtung automatisch schließen.

Selbstverständlich kann sich die Sperreinrichtung, die das Entklinken des Schaltwerkes verhindert, auch an anderer geeigneter Stelle, zum Beispiel im Schaltwerk, befinden.

Dabei kann die eigentliche Sperrvorrichtung, zum Beispiel elektromechanisch, elektromagnetisch, elektrothermisch, mit Hilfe von herkömmlichen Aktoren, einen FGL-Antrieb oder ähnlich angetrieben werden.

Eine weitere Ausgestaltung der Erfindung liegt darin, mit dieser auch den Anstieg der Ansprechwerte von Fehlerstromschutschaltern nach einem Kurzschluß zu erkennen.

Zu diesem Zwecke detektiert ein entsprechend dimensionierter Stromsensor den Kurzschlußstrom, der durch den Schalter fließt, und löst über eine geeignete Einrichtung die oben beschriebenen Meßvorgänge aus. Um zu verhindern, daß diese Vorgänge schon bei Überlast eintreten, läßt sich für die Kurzschlußstromerkennung zum Beispiel eine RogowskiSpule einsetzen, die nicht den Kurzschlußstrom $i_k$ mißt, sondern dessen Anstieg $\frac{di_k}{dt}$. Hat der Schalter durch den Kurzschlußstrom Schaden genommen, wird Alarm gegeben und/oder der Hauptstromkontakt geöffnet.

Alle sich aus der Erfindung ergebende Hardware kann in Form eines herkömmlichen, an den Fehlerstromschutzschalter anflanschbaren Hilfsschalters ausgebildet sein. Auch ist es sinnvoll, alle Funktionen des erfindungsgemäßen Fehlerstromschutzschalters mittels herkömmlicher Mittel, beispielsweise durch Hilfskontakte, zu überwachen und bei Versagen, das heißt Ausfall einer oder mehrerer Funktionen Alarm zu geben.

Diese Überwachung und die Auswertung der Fehlerstromansprechwerte kann erfindungsgemäß auch in eine gebäudesystemtechnische Anlage integriert werden, die über Busleitungen mit weiteren Fehlerstromschutzschaltern korrespondiert, und die viele der genannten Funktionen zentral erfüllt.

Bei dem oben beschriebenen Überwachungsverfahren wird der Grenzansprech-Fehlerstrom zu niedrig eingestellt, weil normalerweise gewisse Isolationsströme oder auch kapazitive Leckströme gegen Erde fließen, die die von der Überwachungselektronik des Schalters erzeugten und gemessenen Prüffehlerströme verfälschen.

Dieser Nachteil wird dadurch beseitigt, daß der Isolationsstrom ständig gemessen wird und beim Prüfbeziehungsweise Überwachungsvorgang vom Prüffehlerstrom automatisch abgezogen wird. Damit verschwinden die großen, durch diese Leckströme bedingten, Schwankungen der Ansprechwerte.

In den meisten Fehlerstromschutzschaltern wird davon Abstand genommen, die Hauptstromkontakte zu überprüfen, obwohl es - zwar äußerst selten - zum Beispiel nach Kurzschlüssen zum Verschweißen der Hauptstromkontakte kommen kann. Das gleiche gilt auch für das Klemmen eines Schaltwerkes. Damit wäre die Fehlerstromschutzfunktion aufgehoben, das heißt der Schalter würde im Fehlerstromfall versagen.

Um auch diesen Nachteil zu beseitigen, wird automatisch ständig die Netzspannung direkt oder beispielsweise über einen Vorwiderstand hinter den Kontakten gemessen und im Fehlerstromfall beim Nichtöffnen der Hauptstromkontakte an ein dem Fehlerstromschutzschalter vor- oder nachgeschaltetes verschweißfestes Schaltgerät der Befehl zum Abschalten gegeben.

Um ein Verschweißen der Hauptstromkontakte nach einem Kurzschluß zu kontrollieren, müssen diese erfindungsgemäß zeitverzögert, zum Beispiel nach 20 ms oder nach dem nächsten Nulldurchgang öffnen. Öffnen sie nicht, schaltet ein nachgeschaltetes Schaltgerät ab und läßt sich nicht mehr einschalten (Fail-safe-Verhalten).

Das Meßsignal wird außerdem zur optischen und/oder akustischen Signalgabe verarbeitet beziehungsweise an die Zentrale einer gebäudesystemtechnischen Anlage weitergeleitet.

Eine weitere Möglichkeit der Überprüfung des Schaltwerkes auf Verschweißung der Hauptstromkontakte nach einem Kurzschluß besteht auf folgende Weise:

Da nach einem Kurzschluß die Netzspannung durch den entsprechenden Leitungsschutzschalter abgeschaltet wird, sind ein oder mehrere Kondensatoren als Energiezwischenspeicher notwendig, um die Überwachungselektronik des Fehlerstromschutzschalters funktionsbereit zu halten. Nach jedem Kurzschluß werden der Fehlerstrom und die Ansprechzeit überprüft und die Kontakte des Schaltwerkes geöffnet. Dies kann dadurch geschehen, daß ein Fehlerstrom der Größenordnung des Prüffehlerstromes generiert wird, der den Magnetauslöser zum Ansprechen bringt. Dieser schlägt mit Hilfe seines Stößels das Schaltwerk auf.

Nachdem der Leitungsschutzschalter wieder eingeschaltet wurde, zeigt die Netzspannungsmessung hinter den Hauptstromkontakten des Fehlerstromschutzschalters an, ob die Kontakte auch wirklich offen sind. Wenn nicht, versucht nun die Sperreinrichtung die Kontakte zu öffnen. Gelingt dies nicht (Netzspannung wird noch immer angezeigt), erzeugt ein Schalter im Fehlerstromschutzschalter einen Kurzschluß, der den Leitungsschutzschalter erneut auslöst. Am Fehlerstromschutzschalter wird dies durch akustischen und/oder optischen Alarm angezeigt.

Sollte der Leitungsschutzschalter wider jeder Vernunft nochmals eingeschaltet werden, werden die Stromleitungen im Fehlerstromschutzschalter gesprengt beziehungsweise mit Hilfe eines oder mehrerer isolierter Messer aufgeschnitten.

Bisher wurde nicht beschrieben, wie der Mikroprozessor erfährt, daß der Magnetauslöser bei den vorbestimmten Ansprechwerten auslöst. Im einfachsten Fall geschieht dies mittels Hilfskontakten, wie in der Schutzschaltgerätetechnik üblich. Ebenso sind Lichtschranken, vorzugsweise Wechsellichtschranken (Reflexionslichtschranken) möglich. Eine elegantere Möglichkeit besteht darin, daß die in der Sekundärwicklung des Auslösers beim Öffnen der Magnetkontakte entstehende induktive Stromspitze gemessen und ausgewertet wird.

Desweiteren kann der Mikroprozessor mit einer gebäudesystemtechnischen Anlage korrespondieren. Auch kann ein Teil aller elektronischen Funktionen, wie Vergleichen, Speichern und so weiter von der Zentrale dieser Anlage übernommen werden.

Anhand von Zeichnungen soll die Erfindung, sowie deren vorteilhafte Ausgestaltung näher erläutert und beschrieben werden.

Es zeigen

Fig. 1 das Prinzipschaltbild eines Fehlerstromschutzschalters mit Prüftaste nach dem Stand der Technik,

Fig. 2 das Prinzipschaltbild eines Fehlerstromschutzschalters mit automatischer Prüftaste und Schaltwerkssperre nach DE-PS 41 06 652.

Fig. 3 das Prinzipschaltbild des erfindungsgemäßen Fehlerstromschutzschalters mit Schaltwerkssperre, Stromgeber, Stromsensor, Komparator, Operationsverstärker und Signalgabeeinrichtung,

Fig. 4 ein weiteres Prinzipschaltbild des Fehlerstromschutzschalters gemäß Figur 3, jedoch mit einem Zeitgeber,

Fig. 5 ein ebensolches Prinzipschaltbild des Fehlerstromschutzschalters gemäß Fig. 3 ohne Schaltwerkssperre, jedoch mit Bypass und Schaltwerksantrieb,

Fig. 6 das Schaltbild gemäß Fig. 5, jedoch mit zusätzlichem Schaltgerät, welches das Stromversorgungsnetz auch bei Versagen des Fehlerstromschutzschalter-Schaltwerkes abschalten kann.

Fig. 7 eine beispielshafte Ausbildung einer Schaltwerkssperre,

Fig. 8 eine weitere beispielhafte Form der Schaltwerkssperre beziehungsweise der Sperreinrichtung,

Fig. 9 das Prinzipschaltbild einer weiteren Ausführungsform des erfindungsgemäßen Fehlerstromschutzschalters mit einer Einrichtung zur Erkennung von Verschweißungen der Hauptstromkontakte und einer Einrichtung für Fail-safe-Verhalten,

Fig. 10 ein abgewandeltes Schaltbild des Fehlerstromschutzschalters mit Kurzschlußschalter und Sprengkapseln bzw. Messern.

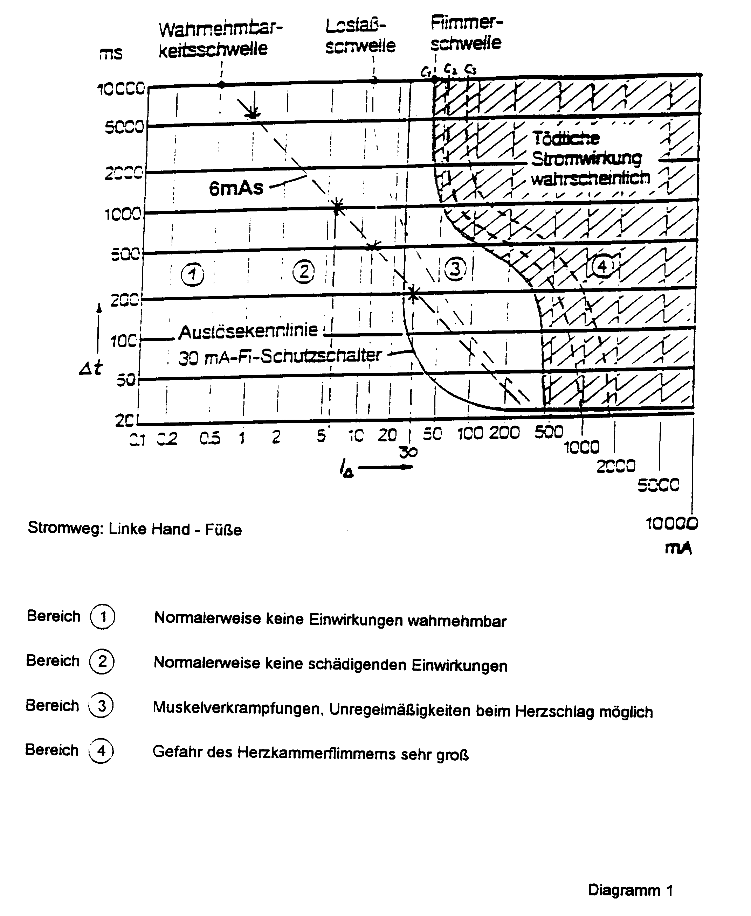

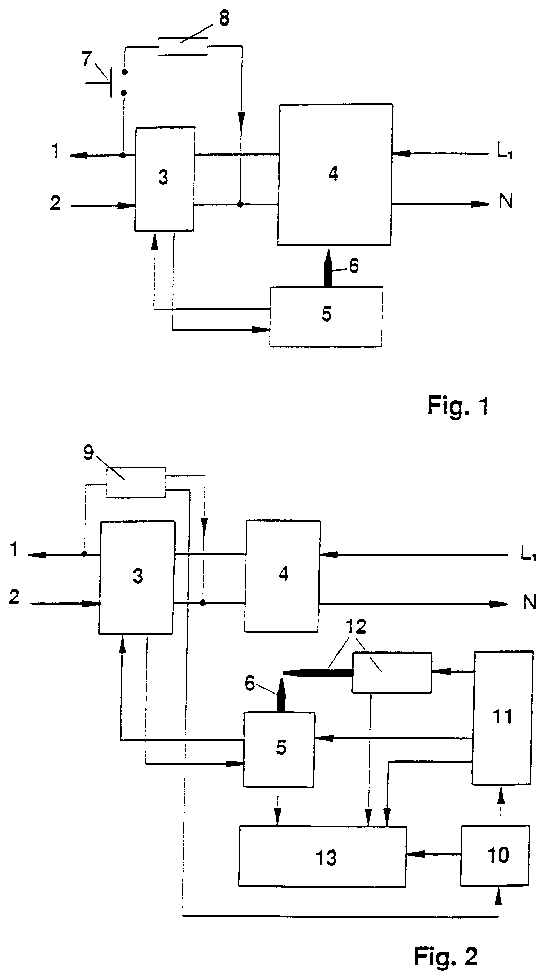

Fig. 1 stellt einen üblichen 2-poligen Fehlerstromschutzschaler nach dem Stand der Technik dar. Die beiden Netzleitungen, Außenleiter 1 und Neutralleiter 2, durchlaufen einen Summenstromwandler 3 und ein Schaltwerk 4. Bei Auftreten eines Fehlerstromes erzeugt der Wandler 3 ein Signal, das einen Auslöser 5 zum Ansprechen bringt, der seinerseits das Schaltwerk 4 mit Hilfe eines Stößels 6 aufschlägt und damit den Strom in den Netzleitungen 1 und 2 unterbricht.

Um die Funktionstüchtigkeit des Fehlerstromschutzschalters in regelmäßigen Abständen überprüfen zu können, ist eine Prüfeinrichtung, bestehend aus einer Prüftaste 7 und einem Prüfwiderstand 8, vorgesehen. Bei Drücken der Prüftaste 7 fließt über den Widerstand 8 ein Fehlerstrom, der den Schalter ausschaltet. Nach dem Prüfvorgang muß der Schalter manuell wieder eingeschaltet werden.

Fig. 2 zeigt einen 2-poligen Fehlerstromschutzschalter mit einer automatischen Prüftaste gemäß DE-PS 41 06 652. Hier ist eine automatische Prüfeinrichtung 9 vorgesehen, die kurz vor Einsetzen des automatischen Prüfvorganges an eine Steuereinheit 10 ein Signal gibt, die über einen Antrieb 11 zwischen Auslöserstößel 6 und Schaltwerk 4 eine Sperreinnchtung 12 schiebt. Diese verhindert die Stromunterbrechung durch das Schaltwerk 4, aber nicht das Auslösen des Auslösers 5. Eine Überwachungs- und Signalgabeeinheit 13 überwacht automatisch die Funktionstüchtigkeit der einzelnen Baugruppen und gibt außerdem Alarm, wenn der Auslöser 5 nicht auslösen sollte.

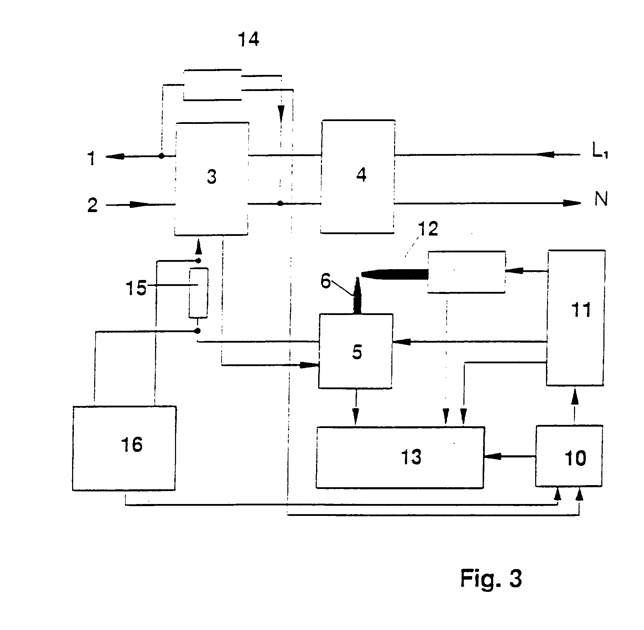

Fig. 3 zeigt ein Ausführungsbeispiel des erfindungsgemäßen Fehlerstromschutzschalters, mit folgenden Funktionsgruppen: Neben den in Fig. 2 gezeigten und bereits erläuterten Elementen 1 bis 13 ist in die Schaltung ein Stromgeber 14, ein Meßwiderstand 15 und eine Einheit 16, bestehend aus Komparator, Operationsverstärker, Meßwertspeicher und Differenzierglied beziehungsweise Differenzbildner hinzugefügt. Der Stromgeber 14 erzeugt automatisch in vorbestimmten Zeiten einen ansteigenden Fehlerstrom, der nach Erreichen des Ansprechwertes den Auslöser 5 zum Auslösen bringt. Dabei verhindert die Sperreinrichtung 12 das Abschalten des Stromes in den Netzleitungen 1 und 2.

Ein Stromsensor, hier der Meßwiderstand 15, erfaßt über eine Spannungsmessung den Ansprechwert mit Hilfe einer Sample and Hold-Schaltung. Außerdem vergleicht der Komparator der Einheit 16 die an dem Widerstand 15 abgegriffene Spannung mit dem Sollansprechwert. Alle nach den vorbestimmten Zeitabständen gemessenen Ansprechwerte speichert ein Speicher. Selbstverständlich können alle diese Operationen auch in Digitaltechnik ausgeführt werden.

Ein Differenzbildner ermittelt jeweils aus den momentanen und vorausgegangenen Werten den Anstieg der Stromansprechwerte, um aus diesen auf den Ausfallzeitpunkt des Fehlerstromschutzschalters zu extrapolieren. Wird ein sich anbahnender Defekt erkannt, gibt die Überwachungseinheit 13 ein Alarmsignal ab und weist in einem hier nicht dargestellten Display auf diesen hin. In einer weiteren Ausgestaltung der Erfindung erscheint auf dem Display der Zeitpunkt (Datum), an dem der Schalter ausgewechselt werden sollte.

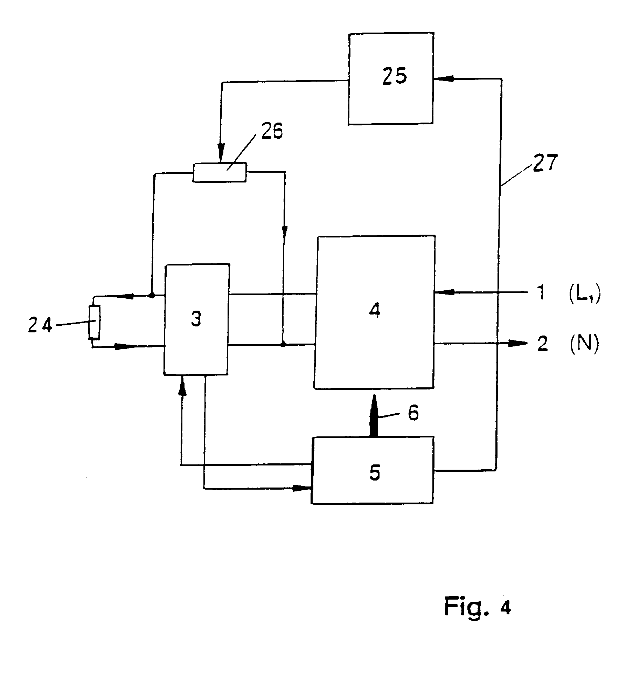

Fig. 4 zeigt ein Ausführungsbeispiel des erfindungsgemäßen Fehlerstromschutzschalters ohne Sperreinrichtung, der nur die Ansprechzeit überprüft und folgende Funktionsgruppen aufweist: Wandler 3, Schaltwerk 4, Auslöser 5, Stößel 6 sowie einen Verbraucher 24, Mikroprozessor 25 und einen elektronischen Schalter 26. Ein im Mikroprozessor 25 integrierter Zeitmesser mißt in vorwählbaren Zeitabständen die Ansprechzeit des Fehlerstromschutzschalters, der im wesentlichen, wie weiter oben beschrieben ist, aus Wandler 3, Schaltwerk 4 und Auslöser 5 besteht.

Die gemessene Ansprechzeit wird im Mikroprozessor 25 mit der Sollansprechzeit verglichen. Bei Überschreiten des Sollwertes wird über einen nicht gezeichneten Alarmgeber optischer und/oder akustischer Alarm gegeben. Selbstverständlich kann der Mikroprozessor auch in der Zentraleinheit einer gebäudesystemtechnischen Anlage enthalten sein.

Ähnlich wird mit der Bildung und Überwachung des Produktes aus Ansprechzeit und -strom verfahren. Im einzelnen spielt sich der automatische Prüfvorgang wie folgt ab:

Zu einen Zeitpunkt $t_1$ erzeugt der Mikroprozessor 25 einen Impuls, mit dem der elektronische Schalter 26 öffnet. Über einen in diesem Schalter eingebauten Begrenzungswiderstand fließt dann ein vorwählbarer Fehlerstrom, der im Wandler 3 eine Sekundärspannung erzeugt, die den Auslöser 5 betätigt. Der Stößel 6 schlägt das Schaltwerk 4 auf, das durch eine nichtgezeigte Fembedienung innerhalb 200 ms wieder schließt. Gleichzeitig mit dem Aufschlagen des Schaltwerkes 4 erzeugt der Auslöser 5 ein Signal, das über eine Leitung 27 an dem Mikroprozessor 25 gemeldet wird. Erfolgt diese Meldung nicht, so erhöht der Mikroprozessor die Zeitdauer, bis ein Ansprechen des Auslösers 5 erfolgt.

Die jeweilige Ansprechzeit speichert der Mikroprozessor in einem EEPROM, damit die Werte bei Stromausfall nicht verloren gehen. Liegen zwei oder mehrere Ansprechzeten vor, bildet der Mikroprozessor den Anstieg $\frac{dt_a}{dt}$ derselben und extrapoliert gegebenenfalls auf den Zeitpunkt, zu dem die Sollansprechzeit überschritten wird. Gleichzeitig gibt er stillen und/oder lauten Alarm. Stellt der Mikroprozessor einen Bestandteil der Zentraleinheit einer gebäudesystemtechnischen Anlage dar, so meldet diese den Zeitpunkt des voraussichtlichen Überschreitens der Sollansprechzeit. Der Schalter kann ausgewechselt werden, bevor er nicht mehr seinen technischen Anforderungen genügt.

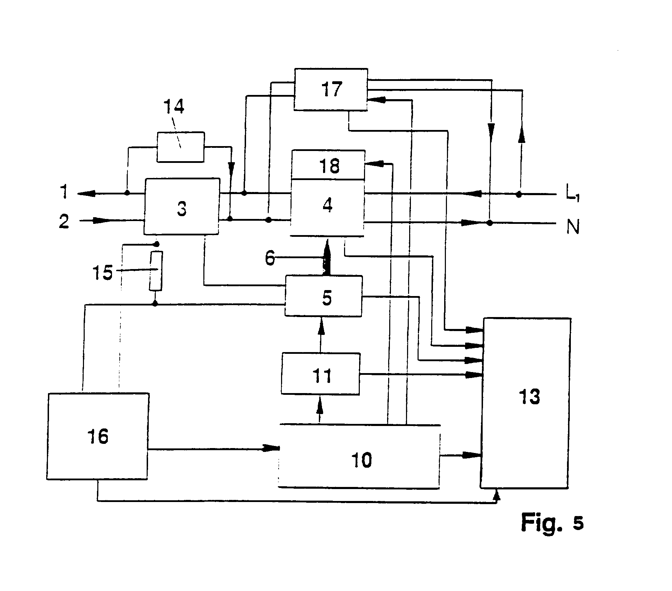

Fig. 5 zeigt ein Ausführungsbeispiel ohne Sperreinrichtung, dafür mit einem Bypass 17 und einem Schaltwerksantrieb 18.

Bei dieser Ausführung wird nicht nur der Ansprechwert des Auslösers 5 ermittelt, gespeichert und ausgewertet, sondern es werden gleichzeitig auch alle anderen Baugruppen, einschließlich des Schaltwerkes 4, seines Antriebes 18 und Bypasses 17 überwacht. Die Funktionsweise läßt sich ohne weiteres aus der Beschreibung der Fig. 3 ableiten.

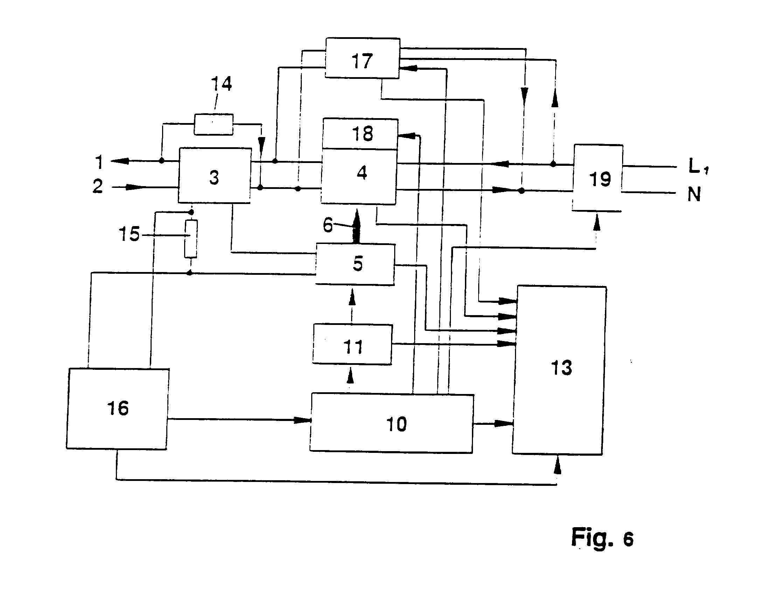

Fig. 6 zeigt ein weiteres Ausführungsbeispiel ähnlich Fig. 5, jedoch ergänzt durch ein Schaltgerät 19. Dieses schaltet ab, wenn nach einer vorbestimmten, aus dem Anstieg des Ansprechwertes ermittelten Zeit der Fehlerstromschutzschalter nicht ausgetauscht wurde (Fail-safe-Verhalten).

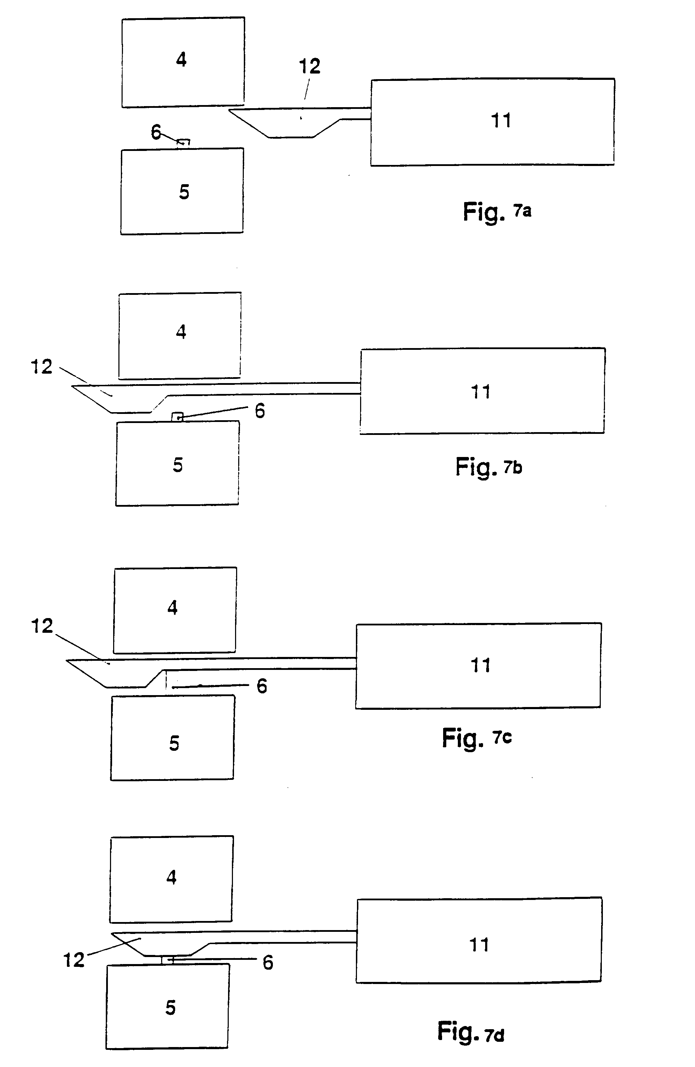

Die aus vier Figuren 7a bis 7d bestehende Fig. 7 zeigt eine von vielen denkbaren Ausführungsformen der Sperreinnchtung 12 nebst ihrem Antrieb 11, die sich bei einigen der vorgenannten Ausführungsbeispiele zwischen den Stößel 6 und das Schaltwerk 4 schiebt und beim Zurückziehen automatisch beispielsweise die Magnetkontakte des Magnetauslösers 5 schließt.

Dabei stellt Fig. 7a die Ausgangsphase des Überwachungsvorganges dar. Der Stößel 6 des Auslösers 5 und die Sperreinrichtung 12 befindet sich in Bereitschaftsstellung, das heißt im eingezogenen Zustand. Es ist erkennbar, daß die löffelartig ausgebildete Sperreinrichtung 12 an dem Stößel 6 vorbeischießen kann.

Fig. 7b zeigt die Sperreinrichtung 12 in der Stellung, in der ein Ausschalten des Schaltwerkes 4 nicht mehr möglich ist.

Wenn nun der Ansprechwert gemessen wird und dabei der Auslöser 5 auslöst, schlägt der Stößel 6 an die Sperreinrichtung 12 an, wie in Fig. 7c gezeigt ist.

Nach Beendigung des Vorganges zieht sich die Sperreinrichtung 12 zurück und schiebt. wie in Fig. 7d erkennbar, mit ihrer Verdickung den Stößel 6 nach unten. der seinerseits die Magnetkontakte des Auslösers 5 wieder schließt.

Nach Schließung der Magnetkontakte geht die Sperreinrichtung 12 wieder in ihre Ausgangsposition gemäß Fig. 7a.

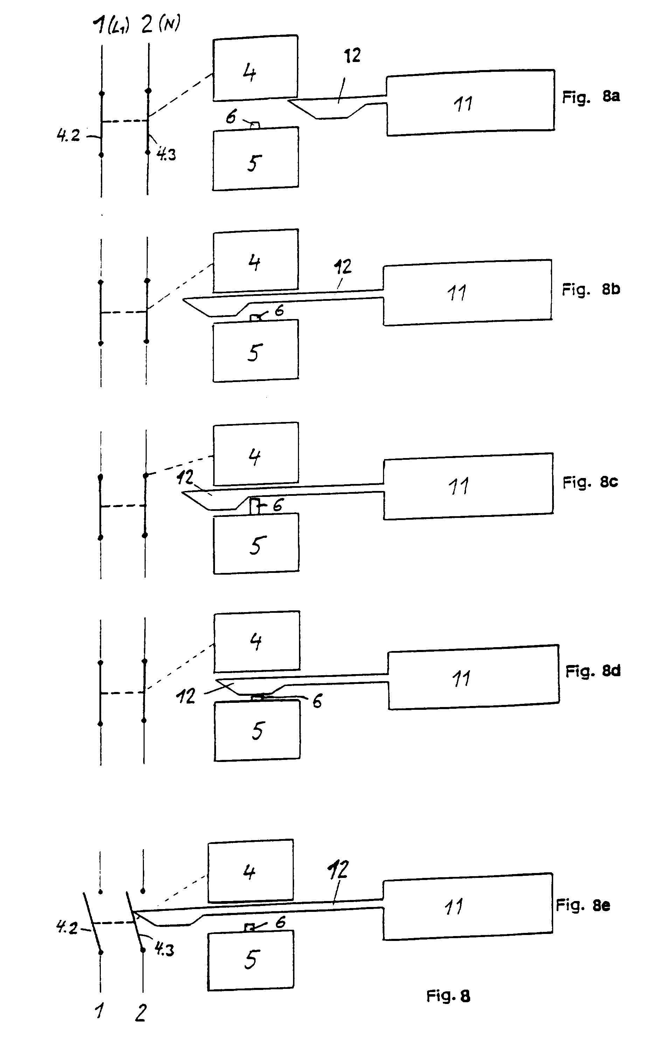

In Fig. 8a bis 8e sind die unterschiedlichen Aufgaben der Sperreinrichtung 12 und deren Lösungen dargestellt.

Fig. 8a zeigt die Sperreinrichtung 12 mit dem Antrieb 11 in Ausgangsposition. Die Hauptstromkontakte 4.2 und 4.3 des Schaltwerkes 4, die die Netzleitungen 12 auftrennen können, und die Magnetkontakte des Magnetauslösers 5 sind hier noch geschlossen. Der Stößel 6, der das Schaltwerk 4 zwecks Öffnen der Hauptstromkontakte 4.2 und 4.3 aufschlagen kann, befindet sich ebenfalls noch in der Ausgangsposition.

Wenn nun der Befehl von der Zeitschaltuhr des Mikroprozessors kommt, den Überwachungsvorgang einzuleiten. fährt zuerst die Sperreinrichtung 12 zwischen Auslöser 5 und Schaltwerk 4 (Fig. 8b). Unmittelbar danach wird der Magnetauslöser 5 ausgelöst, der Stößel 6 schlägt gegen Sperreinrichtung 12. die das Aufschlagen des Schaltwerkes 4 und damit das Öffnen der Hauptstromkontakte 4.2 und 4.3 verhindert (Fig. 8c).

Nach Beendigung des Überwachungsvorganges zieht sich die Sperreinrichtung 12 zurück und schließt durch ihre spezielle Form die Magnetkontakte des Magnetauslösers 5, indem sie den Stößel 6 nach unten drückt (Fig. 8d).

Hat sich bei der Überprüfung des Fehlerstromansprechwertes und der Ansprechzeit herausgestellt, daß diese zu hoch im Sinne eines Fehlerstromschutzes liegen, fährt die Sperreinrichtung 12 zwischen Schaltwerk 4 und Auslöser 5 hindurch und öffnet dadurch die Hauptstromkontakte 4.2 und 4.3 und verbleibt in dieser Stellung, so daß sich die Kontakte nicht mehr schließen können (Fig. 8e).

Falls erforderlich, wird durch einen zusätzlichen Schaltvorgang der Sperreinrichtung 12 der Magnetauslöser geschlossen, damit die Magnetkontakte nicht verschmutzen können.

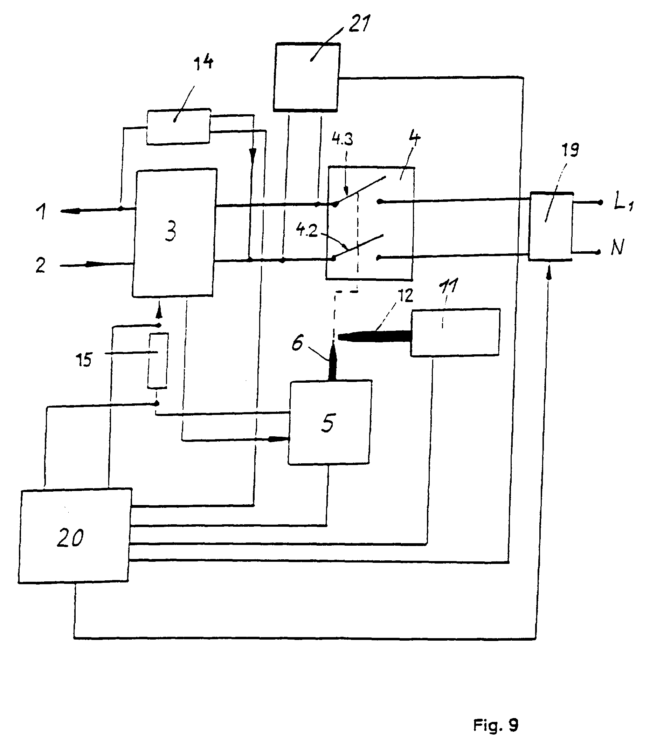

Fig. 9 zeigt das Prinzipschaltbild des erfindungsgemäßen Fehlerstromschutzschalters mit einer Einrichtung zur Erkennung von Verschweißungen der Hauptstromkontakte und mit Fail-safe-Verhalten. Die beiden Netzleitungen, Außenleiter 1 und Neutralleiter 2 durchlaufen den Summenstromwandler 3 und das Schaltwerk 4. Bei Auftreten eines Fehlerstromes erzeugt der Wandler 3 ein Signal, das den Auslöser 5 zum Ansprechen bringt, der wiederum das Schaltwerk 4 mit Hilfe des Stößels 6 aufschlägt und damit den Strom in den Netzleitungen 1 und 2 unterbricht.

Für die Überwachung des Fehlerstromansprechwertes befindet sich, angeschlossen an die Sekundärwicklung des Summenstromwandlers 3, ein Meßwiderstand 15, der wie alle anderen Baugruppen, mit einem Mikroprozessor 20 verbunden ist.

Der Stromgeber 14 erzeugt automatisch in vorbestimmten Zeiten einen ansteigenden Fehlerstrom, der nach Erreichen des Ansprechwertes den Auslöser 5 zum Auslösen bringt. Dabei verhindert die Sperreinrichtung 12, wie bereits beschrieben, das Abschalten des Stromes in den Netzleitungen 1 und 2. Ein Stromsensor, hier der Meßwiderstand 15, erfaßt über eine Spannungsmessung den Ansprechwert, beispielsweise mit Hilfe einer "Sample and Hold-Schaltung". Außerdem vergleicht der Komparator der Einheit 20 die am Widerstand 15 abgegriffene Spannung mit dem Sollansprechwert. Alle nach den vorbestimmten Zeitabständen gemessenen Ansprechwerte speichert ein Speicher. Selbstverständlich werden alle diese Operationen im Mikroprozessor 20 ausgeführt.

Ein Differenzbildner ermittelt jeweils aus den momentanen und vorausgegangenen Werten den Anstieg der Stromansprechwerte, um aus diesen auf den Ausfallzeitpunkt des Fehlerstromschutzschalters zu extrapolieren. Wird ein sich anbahnender Defekt erkannt, gibt die Überwachungseinheit im Mikroprozessor 20 ein Alarmsignal ab und weist in einem hier nicht dargestellten Display auf diesen hin. In einer weiteren Ausgestaltung erscheint auf dem Display der Zeitpunkt (Datum), an dem der Schalter ausgewechselt werden sollte.

Zur Überwachung der Ansprechzeit wird mit Hilfe eines im Mikroprozessor 20 integrierten Zeitgebers in vorbestimmten Zeitabständen die Ansprechzeit des Fehlerstromschutzschalters gemessen, mit einer Sollansprechzeit verglichen und bei Überschreiten derselben Alarm gegeben.

Erfolgt keine Alarmgabe, so wird die gemessene Ansprechzeit gespeichert und bei der nächsten Messung (Prüfung) ihr Anstieg bestimmt. Aus diesem so ermittelten Anstieg läßt sich auf den Zeitpunkt des Überschreitens der maximalen Sollansprechzeit schließen, das heißt extrapolieren und sie in geeigneter Weise zur Anzeige bringen. Dadurch ergibt sich genügend Zeit, den Fehlerstromschutzschalter rechtzeitig austauschen zu lassen.

Da die Ansprechzeit von Schalter zu Schalter unterschiedlich sein kann - beispielsweise muß sie bei "30 mA-Schaltern" zwischen 0 und 500 ms liegen - werden mittels des Mikroprozessors 20 Fehlerströme mit ansteigender Zeitdauer erzeugt, bis diese die Ansprechzeit erreichen.

Die vorbestimmten Zeiten, nach denen jeweils ein Meßvorgang eingeleitet wird, richten sich nach der Größe der Ansprechzeit. Nähert sich die Ansprechzeit dem Sollwert, verkürzen sich automatisch die Zeitabstände, nach denen die jeweils nächsten Messungen erfolgen.

Um nun auch noch das Verschweißen der Kontakte 4.2 und 4.3 nach einem Kurzschluß anzeigen zu können, wird hinter diesen ein Spannungsmesser 21 angeordnet, der ebenfalls mit dem Mikroprozessor 20 verbunden ist.

Wie bei Fig. 8e bereits beschrieben wurde, soll die Sperreinrichtung 12 die Hauptstromkontakte 4.2 und 4.3 dann aufschlagen, wenn sich bei der Überprüfung des Fehlerstromansprechwertes und der Ansprechzeit herausstellt, daß diese zu hoch im Sinne eines Fehlerstromschutzes liegen. Sind die Kontakte verschweißt oder das Schaltwerk verklemmt, gelingt dies der Sperreinrichtung 12 nicht, was der Spannungsmesser 21 sofort an den Mikroprozessor 20 weitergibt, der das Öffnen des Schaltgerätes 19 veranlaßt.

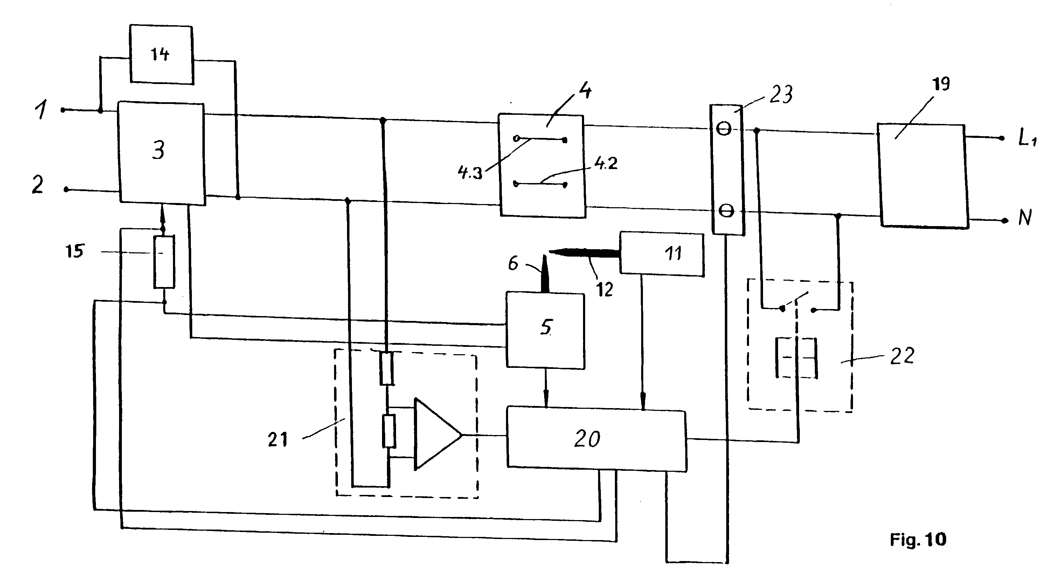

Fig. 10 zeigt ein weiteres Ausführungsbeispiel des erfindungsgemäßen Fehlerstromschutzschalters. Stellt sich während der automatischen Überprüfung der Ansprechwerte heraus, daß diese ihre Sollwerte überschritten haben und trotz optischer oder/und akustischer Warnung der Schalter nicht ausgewechselt wurde, schlägt der Stößel 6 des Auslösers 5 die Kontakte 4.2 und 4.3 des Schaltwerkes 4 auf. Sind diese verschweißt oder verklemmt, was mit Hilfe des Spannungsmessers 21 festgestellt wird, schließt der Mikroprozessor 20 ein Relais 22 und löst dadurch das Schaltgerät 19 aus. Sollte wider Erwarten dieses erneut eingeschaltet werden, ohne den Fehlerstromschutzschalter auszuwechseln, werden automatisch mit Hilfe der Baueinheit 23 die Zuleitungen mechanisch gekappt, was beispielsweise mit Hilfe eines isolierten Messers oder einer Miniatursprengkapsel geschehen kann.

Weitere vorteilhafte Ausgestaltungen des erfindungsgemäßen Fehlerstromschutzschalters sind in den abhängigen Patentansprüchen aufgeführt.

**Patentansprüche**

1. Fehlerstromschutzschalter mit automatischer Überwachungseinrichtung und einem Summenstromwandler (3), einem Magnetauslöser (5), einem Schaltwerk (4) mit Hauptstromkontakten (4.2, 4.3) für die Netzleitungen (1, 2) und einer Sperreinrichtung (12) für das Öffnen der Hauptstromkontakte (4.2, 4.3),
dadurch gekennzeichnet,

daß der Fehlerstromschutzschalter mittels eines Stromgebers (14), eines Stromsensors (15), eines Zeitgebers und eines elektronischen Zeitmessers (16, 20) seine Ansprechzeit und gegebenenfalls seinen Fehlerstromansprechwert in vorbestimmten Zeitabständen mißt, mit Sollansprechzeiten und gegebenenfalls Sollansprechströmen vergleicht, und durch Vergleich mehrerer gemessener Ansprechzeiten und gegebenenfalls Fehlerstromansprechwerte einen sich anbahnenden Defekt rechtzeitig erkennt und anzeigt,
wobei während der Messung mittels der Sperreinrichtung (12) das Öffnen der Hauptstromkontakte (4.2, 4.3) verhindert wird,
und wobei die Sperreinrichtung (12) gegebenenfalls so ausgebildet ist, daß diese nach Überschreiten vorbestimmter Grenzansprechwerte zum Aufschlagen der Hauptstromkontakte (4.2, 4.3) und anschließend als Wiedereinschaltsperre dienen kann, was einem Fail-safe-Verhalten gleichkommt.
Des weiteren ist aus der GB-A 2 056 094 ein Gerät zum Testen von Fehlerstromschutzschaltern bekannt, welches jedoch nicht zum Einbau in den Schalter vorgesehen ist.
Die meisten bekannten Fehlerstromschutzschalter arbeiten heute netzspannungsunabhängig (siehe G. Biegelmeier; Schutzmaßnahmen in Niederspannungsanlagen; Österreichischer Gewerbeverlag, Wien 1978), doch gibt es auch sogenannte DI-Schalter, die netzabhängige Fehlerstromschutzschalter sind. DI-Schalter besitzen, wie die netzspannungsunabhängigen, einen Summenstromwandler mit Sekundärwicklung, die an eine netzabhängige Auswerte-Elektronik anschließt. Der Vorteil dieser Schalter liegt darin, daß sie keine hochempfindlichen Auslöser wie die Magnetauslöser benötigen. Die Elektronik kann jedes beliebig unempfindliche Relais speisen, welches im Fehlerstromfall das Schaltwerk auslöst. Das Schaltwerk kann sogar ein von dieser Elektronik gesteuertes Schütz sein.

2. Fehlerstromschutzschalter nach Anspruch 1, dadurch gekennzeichnet, daß sein Fehlerstromansprechwert mit seiner Ansprechzeit multipliziert wird und daß das Produkt aus beiden, welches einen bestimmten konstanten Wert (beispielsweise 6 mAs) nicht überschreiten darf, zur automatischen Überwachung herangezogen wird.

3. Fehlerstromschutzschalter nach Anspruch 1 oder 2, dadurch gekennzeichnet, daß die Sperreinrichtung (12) beim Zurückziehen die Kontakte des Magnetauslösers (5) wieder schließt.

4. Fehlerstromschutzschalter nach einem der Ansprüche 1 bis 3, dadurch gekennzeichnet. daß die Sperreinrichtung (12) bei einem Fehler in der Steuerelektronik beispielsweise mittels einer Feder herausgezogen wird, um die Fehlerstromschutzfunktion zu erhalten, jedoch nicht nach einer Fail-safe-Stromschutzschaltung.

5. Fehlerstromschutzschalter nach einem der Ansprüche 1 bis 4, dadurch gekennzeichnet, daß alle in bestimmten Zeitabständen gemessenen Ansprechwerte gespeichert werden und aus dem automatisch gebildeten zeitlichen Anstieg derselben auf den Zeitpunkt des Überschreitens der Sollansprechwerte geschlossen, das heißt extrapoliert wird.

6. Fehlerstromschutzschalter nach einem der Ansprüche 1 bis 5, dadurch gekennzeichnet, daß der Ansprechwert durch einen künstlich erzeugten, das heißt simulierten ansteigenden Fehlerstrom erreicht wird, wobei man beispielsweise den ansteigenden Strom durch einen sogenannten Rampengenerator oder ähnlich erzeugt.

**7.** Fehlerstromschutzschalter nach einem der Ansprüche 1 bis 6, dadurch gekennzeichnet, daß die Länge der vorbestimmten Zeiten sich nach der Höhe des jeweils gemessenen Ansprechwertes richtet, daß zum Beispiel dann, wenn der Ansprechwert sich dem Sollwert nähert, die oben genannten Zeitabstände immer kürzer werden.

**8.** Fehlerstromschutzschalter nach einem der Ansprüche 1 bis 7, dadurch gekennzeichnet, daß bei Erreichen eines bestimmten Anstieg-Wertes Alarm gegeben und/oder die Hauptstromkontakte (4.2, 4.3) geöffnet und gleich wieder automatisch geschlossen werden.

**9.** Fehlerstromschutzschalter nach einem der Ansprüche 1 bis 8, dadurch gekennzeichnet, daß sich vor Öffnen der Hauptstromkontakte (4.2, 4.3) über diese automatisch bypass-ähnliche Hilfsstromkontakte (17) schalten, die sich nach dem Gesamtprüfungsvorgang, das heißt nach dem Wiederschließen der Hauptstromkontakte (4.2, 4.3) öffnen, so daß während des oben genannten Vorgangs kein Stromausfall auftritt.

**10.** Fehlerstromschutzschalter nach einem der Ansprüche 1 bis 9, dadurch gekennzeichnet, daß der Antrieb der Sperreinrichtung (12) zum Beispiel elektromechanisch, -magnetisch oder -thermisch, mit Hilfe von herkömmlichen Aktoren, einem FGL-Antrieb und ähnlichem erfolgt.

**11.** Fehlerstromschutzschalter nach einem der Ansprüche 1 bis 10, dadurch gekennzeichnet, daß die Zeit, die verstreicht, bis der Fehlerstromschutzschalter wieder funktionsbereit ist, kleiner als 200 ms ist.

**12.** Fehlerstromschutzschalter nach einem der Ansprüche 1 bis 11, dadurch gekennzeichnet, daß die Meß- und Überwachungseinrichtung die Form eines herkömmlichen, an dem Fehlerstromschutzschalter anflanschbaren Hilfsschalters besitzt.

**13.** Fehlerstromschutzschalter nach einem der Ansprüche 1 bis 12, dadurch gekennzeichnet, daß alle Funktionen mittels herkömmlicher Mittel, beispielsweise durch Hilfskontakte, überwacht werden und bei Versagen, das heißt Ausfall einer oder mehrerer Funktionen Alarm gegeben wird.

**14.** Fehlerstromschutzschalter nach einem der Ansprüche 1 bis 13, dadurch gekennzeichnet, daß die Einheit zur Überwachung, Steuerung und Signalgabe in eine gebäudesystemtechnische Anlage integriert sind.

**15.** Fehlerstromschutzschalter nach einem der Ansprüche 1 bis 14, dadurch gekennzeichnet, daß ein Verschweißen und/oder Verklemmen der Hauptstromkontakte (4.2, 4.3) beispielsweise nach Kurzschlüssen, durch Netzspannungsmessung (21), vorzugsweise über einen Spannungsteiler oder Vorwiderstand hinter den Kontakten (4.2. 4.3) erkannt wird.

**16.** Fehlerstromschutzschalter nach einem der Ansprüche 1 bis 15, dadurch gekennzeichnet, daß nach Erkennen des Nichtöffnens der Hauptstromkontakte (4.2, 4.3) ein dem Fehlerstromschutzschalter vor- oder nachgeschaltetes Schaltgerät (19) abschaltet.

**17.** Fehlerstromschutzschalter nach einem der Ansprüche 1 bis 16, dadurch gekennzeichnet, daß nach einem Kurzschluß, Blitzschlag oder ähnlichem und/oder nach Öffnen eines dem Fehlerstromschutzschalters in jedem Fall vorgeschalteten Leitungsschutzschalters eine zeitverzögerte Abschaltung der Hauptstromkontakte (4.2, 4.3) des Fehlerstromschutzschalters erfolgt.

**18.** Fehlerstromschutzschalter nach einem der Ansprüche 1 bis 17, dadurch gekennzeichnet, daß ein eventuell fließender Isolationsstrom und/oder kapazitiver Leckstrom sowohl vom Prüffehlerstrom als auch vom Fehlerstrom abgezogen werden.

**19.** Fehlerstromschutzschalter nach einem der Ansprüche 1 bis 18, dadurch gekennzeichnet, daß der Isolationsstrom und/oder der kapazitive Leckstrom ständig überwacht werden.

**20.** Fehlerstromschutzschalter nach einem der Ansprüche bis 19, dadurch gekennzeichnet, daß zur Kontrolle des Öffnens des Magnetauslösers (5) die induktive Stromspitze gemessen und ausgewertet wird, die beim Öffnen der Magnetkontakte in der Auslöserspule entsteht.

**21.** Fehlerstromschutzschalter nach einem der Ansprüche 1 bis 20, dadurch gekennzeichnet, daß ein Defekt in der Steuerelektronik durch eine rote LED angezeigt ist.

**22.** Fehlerstromschutzschalter nach einem der Ansprüche 1 bis 21, dadurch gekennzeichnet, daß bei Versagen der Hauptstromkontakte (4.2, 4.3) ein Schalter einen Kurzschluß erzeugt, der den vor- oder nachgeschalteten Leitungsschutzschalter (19) zum Auslösen bringt.

**23.** Fehlerstromschutzschalter nach Anspruch 22, dadurch gekennzeichnet, daß nach einer Abschaltung des Leitungsschutzschalters (19) wenigstens ein Zwischenspeicher für Energie vorhanden ist, der die Überwachungselektronik funktionsbereit hält.

**24.** Fehlerstromschutzschalter nach einem der Ansprüche 1 bis 23, dadurch gekennzeichnet, daß ein Mikroprozessor (20) oder ein Mikrocomputer die Stromansprechwerte, Ansprechzeiten und das Produkt aus beiden überwacht und alle weiteren elektronischen Funktionen, wie zum Beispiel Steuern, Speichern etc. übernimmt.

**25.** Fehlerstromschutzschalter nach einem der Ansprüche 1 bis 24, dadurch gekennzeichnet, daß der gesamte Überwachungsvorgang automatisch erfolgt.

**26.** Fehlerstromschutzschalter nach einem der Ansprüche 16, 17 oder 25, dadurch gekennzeichnet, daß er sich nur dann wieder einschalten läßt, wenn vorher der Leitungsschutzschalter (19) und/oder das Zusatzschaltgerät eingeschaltet wurde, das heißt wenn er wieder an der Netzspannung liegt.

**27.** Fehlerstromschutzschalter nach einem der Ansprüche 1 bis 26, dadurch gekennzeichnet, daß in einer Notsituation, das heißt, bei Versagen der Fehlerstromschutzfunktion, zum Beispiel bei Nichtauslösen des Schaltwerkes (4), im Fehlerstromfall die Netzleitungen (1, 2) gewaltsam mittels eines oder mehrerer isolierter Messer (23) aufgeschnitten oder mittels einer Miniatursprengkapsel aufgetrennt werden.

**Claims**

**1.** Fault current circuitbreaker with automatic monitoring device and a summation current transformer (3), a magnetic trigger (5), a switching mechanism (4) with main current contacts (4.2, 4.3) for mains lines (1, 2) and a barrier device (12) for the opening of the main current contacts (4.2, 4.3), characterised in that the fault current circuitbreaker by means of a current sender (14), a current sensor (15), a timesignal transmitter and an electronic time measuring device (16, 20) measures its response time and optionally its fault current response value at predetermined time intervals, compares them with target response times and optionally target response currents and, by comparison of several measured response times and optionally fault current response values, recognises and indicates a looming defect in good time, wherein during the measuring the opening of the main current contacts (4.2, 4.3) is prevented by means of the barrier device (12), and wherein the barrier device (12) in a given case is so constructed that after exceeding of predetermined limit response values this can serve for breaking open the main current contacts (4.2, 4.3) and subsequently as a barrier to switching back on, which equates with a fail-safe behaviour.

**2.** Fault current circuitbreaker according to claim 1, characterised in that its fault current response value is multiplied by its response time and that the product of the two, which may not exceed a specific constant value (for example 6 mAs), is drawn upon for the automatic monitoring.

**3.** Fault current circuitbreaker according to claim 1 or 2, characterised in that the barrier device (12), on withdrawal, recloses the contacts of the magnetic trigger (5).

**4.** Fault current circuitbreaker according to one of claims 1 to 3, characterised in that the barrier device (12) in the case of a fault in the control electronic system is withdrawn, for example by means of a spring, in order to obtain the fault current protection function, but not after a fail-safe current circuitbreaking.

**5.** Fault current circuitbreaker according to one of claims 1 to 4, characterised in that all response values measured at specific time intervals are stored and the instant of exceeding the target response values is concluded, i.e. extrapolated, from the automatically formed time increase of the response values.

**6.** Fault current circuitbreaker according to one of claims 1 to 5, characterised in that the response value is attained by an artificially produced, i.e. simulated, rising fault current, wherein the rising current is produced by, for example, a so-called ramp generator or similar.

**7.** Fault current circuitbreaker according to one of claims 1 to 6, characterised in that the length of the predetermined times is oriented to the height of the respectively measured response value, and that when, for example, the response value approaches the target value the aforesaid time intervals become ever shorter.

**8.** Fault current circuitbreaker according to one of claims 1 to 7, characterised in that, on attainment of a specific increase value, an alarm is given and/or the main current contacts (4.2, 4.3) are opened and equally automatically closed again.

**9.** Fault current circuitbreaker according to one of claims 1 to 8, characterised in that before opening of the main current contacts (4.2, 4.3) of the fault current circuitbreaker, automatic bypass-like auxiliary current contacts (17) switch across these and which open after the entire checking process, i.e. after the reclosing of the main current contacts (4.2, 4.3), so that no cutting out of current occurs during the aforesaid process.

10. Fault current circuitbreaker according to one of claims 1 to 9, characterised in that the drive of the barrier device (12) is effected, for example, electromechanically, electromagnetically or electrothermally, with the aid of conventional actuators, an FGL drive or similar.

11. Fault current circuitbreaker according to one of claims 1 to 10, characterised in that the time which extends until the fault current circuitbreaker is functionally ready again is smaller than 200 ms.

12. Fault current circuitbreaker according to one of claims 1 to 11, characterised in that the measuring and monitoring device has the form of a conventional auxiliary switch able to be flange-mounted to the fault current circuitbreaker.

13. Fault current circuitbreaker according to one of claims 1 to 12, characterised in that all functions are monitored by means of conventional means, for example by auxiliary contacts and on breakdown, i.e. failure, of one or more functions an alarm is given.

14. Fault current circuitbreaker according to one of claims 1 to 13, characterised in that the units for monitoring, controlling and signal delivery are integrated into an installation in the manner of modular system technology.

15. Fault current circuitbreaker according to one of claims 1 to 14, characterised in that a welding and/or wedging of the main current contacts (4.2, 4.3), for example after short-circuits, is recognised by mains voltage measurement (21), for example by way of a voltage divider or preliminary resistance behind the contacts (4.2, 4.3).

16. Fault current circuitbreaker according to one of claims 1 to 15, characterised in that after recognition of non-opening of the main current contacts (4.2, 4.3) a switching device (19) connected upstream or downstream of the fault current circuitbreaker switches off.

17. Fault current circuitbreaker according to one of claims 1 to 16, characterised in that after a short-circuit, lightning strike or similar and/or after opening of a line circuitbreaker connected in every case upstream of the fault current circuitbreaker a time-delayed switching-off of the main current contacts (4.2, 4.3) of the fault current circuitbreaker takes place.

18. Fault current circuitbreaker according to one of claims 1 to 17, characterised in that a possibly flowing isolation current and/or capacitive leakage current is or are tapped from both the checking fault current and the fault current.

19. Fault current circuitbreaker according to one of claims 1 to 18, characterised in that the isolation current and/or the capacitive leakage current is or are constantly monitored.

20. Fault current circuitbreaker according to one of claims 1 to 19, characterised in that for checking the opening of the magnetic trigger (5) the inductive current peak, which arises on opening of the magnet contacts in the trigger coil, is measured and evaluated.

21. Fault current circuitbreaker according to one of claims 1 to 20, characterised in that a defect in the control electronic system is indicated by a red light-emitting diode.

22. Fault current circuitbreaker according to one of claims 1 to 21, characterised in that on breakdown of the main current contacts (4.2, 4.3) a switch produces a short-circuit, which triggers the line circuitbreaker (19) connected upstream or downstream.

23. Fault current circuitbreaker according to one of claims 1 to 22, characterised in that after a switching-off of the line circuitbreaker (19) at least one intermediate store for energy is present, which keeps the monitoring electronic system functionally ready.

24. Fault current circuitbreaker according to one of claims 1 to 23, characterised in that a microprocessor (20) or a microcomputer monitors the current response values, response times and the product of the two and takes over all further electronic functions, such as for example, controlling, storing, etc.

25. Fault current circuitbreaker according to one of claims 1 to 24, characterised in that the entire monitoring process takes place automatically.

26. Fault current circuitbreaker according to one of claims 16, 17 or 25, characterised in that it can be switched back on again only if the line circuitbreaker (19) and/or the additional switching device was or were previously switched on, i.e., if it again lies at mains voltage.

27. Fault current circuitbreaker according to one of claims 1 to 26, characterised in that in an emergency situation, i.e. on breakdown of the fault current protective function, for example on non-triggering of the switching mechanism (4), in the case of fault current the mains lines (1, 2) are forcibly cut open by means of one or more insulated knives (23) or separated by means of a miniature detonator.

**Revendications**

1. Coupe-circuit par courant de défaut équipé d'un dispositif de surveillance automatique et d'un convertisseur de courant de sommation (3), d'un déclencheur magnétique (5), d'un mécanisme de commutation (4) avec des contacts de courant principal (4.2, 4.3) pour les lignes du réseau (1, 2) et d'un dispositif de blocage (12) pour l'ouverture des contacts de courant principal (4.2, 4.3), caractérisé

   en ce que le coupe-circuit par courant de défaut mesure au moyen d'un générateur de courant (14), d'un détecteur de courant (15), d'une minuterie et d'un mesureur de temps électronique (16, 20), son temps de réponse et éventuellement sa valeur de réponse à un courant de défaut à des intervalles de temps prédéterminés, le compare à des temps de réponse de consigne et éventuellement à des courants de réponse de consigne, et par comparaison de plusieurs temps de réponse mesurés et éventuellement de valeurs de réponse de courant de défaut, reconnaît en temps voulu et indique un défaut imminent,
   l'ouverture des contacts de courant principal (4.2, 4.3) étant empêchée durant la mesure au moyen du dispositif de blocage (12),
   et le dispositif de blocage (12) étant éventuellement réalisé de sorte que celui-ci peut servir, après dépassement de valeurs de réponse limites prédéterminées, à l'ouverture des contacts de courant principal (4.2, 4.3) et ensuite de blocage de réenclenchement, ce qui équivaut à un comportement à sécurité intégrée.

2. Coupe-circuit par courant de défaut selon la revendication 1, caractérisé en ce que sa valeur de réponse à un courant de défaut est multipliée par son temps de réponse et en ce que le produit des deux, qui ne peut pas dépasser une valeur constante déterminée (par exemple 6 mAs), est utilisé en vue de la surveillance automatique.

3. Coupe-circuit par courant de défaut selon la revendication 1 ou 2, caractérisé en ce que le dispositif de blocage (12) ferme à nouveau les contacts du déclencheur magnétique (5) lors du retrait.

4. Coupe-circuit par courant de défaut selon l'une quelconque des revendications 1 à 3, caractérisé en ce que le dispositif de blocage (12) est neutralisé, par exemple au moyen d'un ressort dans le cas d'une panne de l'électronique de commande, afin de maintenir la fonction de protection par courant de défaut, cependant pas à la manière d'un circuit de protection à sécurité intégrée.

5. Coupe-circuit par courant de défaut selon l'une quelconque des revendications 1 à 4, caractérisé en ce que toutes les valeurs de réponse mesurées à des intervalles de temps déterminés sont mémorisées et à partir de l'accroissement en fonction du temps formé automatiquement de celles-ci, on détermine, c'est-à-dire on extrapole l'instant du franchissement des valeurs de réponse de consigne.

6. Coupe-circuit par courant de défaut selon l'une quelconque des revendications 1 à 5, caractérisé en ce que la valeur de réponse est obtenue par un courant de défaut croissant généré artificiellement, c'est-à-dire simulé, le courant croissant étant par exemple généré par un générateur de rampe ou analogue.

7. Coupe-circuit par courant de défaut selon l'une quelconque des revendications 1 à 6, caractérisé en ce que la longueur des temps prédéterminés s'aligne selon l'amplitude de la valeur de réponse mesurée respective, en ce que par exemple, ensuite, lorsque la valeur de réponse s'approche de la valeur de consigne, les intervalles de temps précités deviennent de plus en plus brefs.

8. Coupe-circuit par courant de défaut selon l'une quelconque des revendications 1 à 7, caractérisé en ce que, lors de l'obtention d'une valeur d'accroissement déterminée, une alarme est déclenchée et/ou les contacts de courant principal (4.2, 4.3) sont ouverts et ensuite à nouveau fermés automatiquement.

9. Coupe-circuit par courant de défaut selon l'une quelconque des revendications 1 à 8, caractérisé en ce qu'avant l'ouverture des contacts de courant principal (4.2, 4.3) sont commutés automatiquement, par l'intermédiaire de ceux-ci, des contacts de courant auxiliaire de dérivation (17), qui s'ouvrent après le processus de vérification global, c'est-à-dire après la fermeture à nouveau des contacts de courant principal (4.2, 4.3), de sorte que, durant le processus précité, aucune panne de courant n'apparaît.

10. Coupe-circuit par courant de défaut selon l'une quelconque des revendications 1 à 9, caractérisé en ce que l'entraînement du dispositif de blocage (12) s'effectue par exemple électromécaniquement, électromagnétiquement, ou électrothermiquement, à l'aide de dispositifs d'actionnement classiques, d'un entraînement FGL et analogue.

11. Coupe-circuit par courant de défaut selon l'une quelconque des revendications 1 à 10, caractérisé en ce que le temps qui s'écoule jusqu'à ce que le coupe-circuit par courant de défaut soit à nouveau prêt à fonctionner est inférieur à 200 ms.

12. Coupe-circuit par courant de défaut selon l'une quelconque des revendications 1 à 11, caractérisé en ce que le dispositif de mesure et de surveillance possède la forme d'un interrupteur auxiliaire classique pouvant être accouplé au coupe-circuit par courant de fuite.

13. Coupe-circuit par courant de défaut selon l'une quelconque des revendications 1 à 12, caractérisé en ce que toutes les fonctions sont surveillées à l'aide de moyens classiques, par exemple par des contacts auxiliaires, et en cas de panne, c'est-à-dire d'une défaillance d'une ou de plusieurs fonctions, une alarme est délivrée.

14. Coupe-circuit par courant de défaut selon l'une quelconque des revendications 1 à 13, caractérisé en ce que l'unité de surveillance, de commande et de délivrance de signaux est intégrée dans une installation technique d'un bâtiment.

15. Coupe-circuit par courant de défaut selon l'une quelconque des revendications 1 à 14, caractérisé en ce qu'une soudure et/ou un coincement des contacts de courant principal (4.2, 4.3) par exemple après un court-circuit, est détecté par mesure de la tension du réseau (21), de préférence par l'intermédiaire d'un diviseur de tension ou d'une résistance série derrière les contacts (4.2, 4.3).

16. Coupe-circuit par courant de défaut selon l'une quelconque des revendications 1 à 15, caractérisé en ce qu'après reconnaissance de la non-ouverture des contacts de courant principal (4.2, 4.3) est coupé un dispositif de commutation disposé en amont ou en aval du coupe-circuit par courant de défaut.

17. Coupe-circuit par courant de défaut selon l'une quelconque des revendications 1 à 16, caractérisé en ce qu'après un court-circuit, un coup de foudre ou analogue et/ou après l'ouverture d'un coupe-circuit de lignes disposé en amont dans chaque cas du coupe-circuit par courant de défaut, est effectuée une coupure temporisée des contacts de courant principal (4.2, 4.3) du coupe-circuit par courant de défaut.

18. Coupe-circuit par courant de défaut selon l'une quelconque des revendications 1 à 17, caractérisé en ce qu'un courant d'isolement circulant éventuellement et/ou un courant de fuite capacitif sont prélevés non seulement du courant de défaut de contrôle, mais également du courant de défaut.

19. Coupe-circuit par courant de défaut selon l'une quelconque des revendications 1 à 18, caractérisé en ce que le courant d'isolement et/ou le courant de fuite capacitif sont surveillés en permanence.

20. Coupe-circuit par courant de défaut selon l'une quelconque des revendications 1 à 19, caractérisé en ce qu'en vue du contrôle de l'ouverture du déclencheur magnétique (5) est mesurée et évaluée la pointe de courant inductif, qui apparaît lors de l'ouverture des contacts magnétiques dans la bobine du déclencheur.

21. Coupe-circuit par courant de défaut selon l'une quelconque des revendications 1 à 20, caractérisé en ce qu'un défaut est indiqué dans l'électronique de commande par une diode électroluminescente rouge.

22. Coupe-circuit par courant de défaut selon l'une quelconque des revendications 1 à 21, caractérisé en ce que lors d'une panne des contacts de courant principal (4.2, 4.3) un commutateur génère un court-circuit qui provoque le déclenchement du coupe-circuit de ligne (19) disposé en amont ou en aval.

23. Coupe-circuit par courant de défaut selon la revendication 22, caractérisé en ce qu'après une coupure du coupe-circuit de ligne (19) au moins un accumulateur intermédiaire d'énergie est prévu, qui maintient l'électronique de surveillance en état de fonctionnement.

24. Coupe-circuit par courant de défaut selon l'une quelconque des revendications 1 à 23, caractérisé en ce qu'un microprocesseur (20) ou un microcalculateur surveille les valeurs de réponse en courant, les temps de réponse et le produit des deux et assure toutes les autres fonctions électroniques, comme par exemple la commande, la mise en mémoire etc.

25. Coupe-circuit par courant de défaut selon l'une quelconque des revendications 1 à 24, caractérisé en ce que la totalité du processus de surveillance s'effectue automatiquement.

26. Coupe-circuit par courant de défaut selon l'une quelconque des revendications 16, 17 ou 25, caractérisé en ce qu'il ne peut être remis en marche lorsque auparavant le coupe-circuit de ligne (19) et/ou le commutateur supplémentaire a été mis en marche, c'est-à-dire lorsqu'il est à nouveau relié à a tension du secteur.

27. Coupe-circuit par courant de défaut selon l'une quelconque des revendications 1 à 26, caractérisé en ce qu'en cas d'urgence, c'est-à-dire, lors d'une panne de la fonction de protection contre un courant de défaut, par exemple, dans le cas d'un non-déclenchement du mécanisme de commutation (4), en cas de courant de défaut, les lignes du secteur (1, 2) sont coupées brusquement au moyen d'un ou de plusieurs couteaux isolés (23) ou sont séparées au moyen d'une capsule explosive miniature.

Stromweg: Linke Hand - Füße

Diagramm 1

Bereich (1)    Normalerweise keine Einwirkungen wahrnehmbar

Bereich (2)    Normalerweise keine schädigenden Einwirkungen

Bereich (3)    Muskelverkrampfungen, Unregelmäßigkeiten beim Herzschlag möglich

Bereich (4)    Gefahr des Herzkammerflimmerns sehr groß

**Fig. 1**

**Fig. 2**

Fig. 3

**Fig. 4**

Fig. 5

**Fig. 6**

Fig. 7a

Fig. 7b

Fig. 7c

Fig. 7d

Fig. 8a

Fig. 8b

Fig. 8c

Fig. 8d

Fig. 8e

Fig. 8

Fig. 9

Fig. 10

24